(19) Europäisches Patentamt
European Patent Office
Office européen des brevets

(11) EP 4 312 096 A1

(12) EUROPÄISCHE PATENTANMELDUNG

(43) Veröffentlichungstag:
31.01.2024 Patentblatt 2024/05

(21) Anmeldenummer: 22186693.2

(22) Anmeldetag: 25.07.2022

(51) Internationale Patentklassifikation (IPC):
G05B 19/418 (2006.01)     G05B 23/02 (2006.01)

(52) Gemeinsame Patentklassifikation (CPC):
G05B 19/4183; G05B 23/0224; G05B 2219/31414;
G05B 2219/32082

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME
Benannte Validierungsstaaten:
KH MA MD TN

(71) Anmelder: Siemens Aktiengesellschaft
80333 München (DE)

(72) Erfinder:
• Duckheim, Mathias
  91052 Erlangen (DE)
• Most, Dieter
  91052 Erlangen (DE)

(74) Vertreter: Siemens Patent Attorneys
Postfach 22 16 34
80506 München (DE)

(54) VERFAHREN ZUM ABSCHÄTZEN EINES ENERGIEVERBRAUCHS BEI EINER ERZEUGUNG EINES PRODUKTS, COMPUTERPROGRAMMPRODUKT, COMPUTERLESBARES SPEICHERMEDIUM SOWIE ELEKTRONISCHE RECHENEINRICHTUNG

(57) Verfahren zum Abschätzen eines Energieverbrauchs (26) bei der Herstellung eines Produkts (14) mittels einer elektronischen Recheneinrichtung (16), mit den Schritten:
- Vorgeben einer Materialbedarfsplanung (28), wobei die Materialbedarfsplanung (28) zumindest einen Produktionsmaschinenverbrauch (30 ,32) des zu produzierenden Produkts (14) umfasst;
- Vorgeben von zumindest einem historischen Energieverbrauch (34) für ein in der Vergangenheit produziertes Produkt (14); und
- Abschätzen des Energieverbrauchs (26) durch Auswerten der Materialbedarfsplanung (28) und dem historischen Energieverbrauch (34) mittels eines maschinellen Lernalgorithmus (36) der elektronischen Recheneinrichtung (16).

Ferner betrifft die Erfindung ein Computerprogrammprodukt, ein computerlesbares Speichermedium sowie eine elektronische Recheneinrichtung (16).

EP 4 312 096 A1

**Beschreibung**

Die Erfindung betrifft ein Verfahren zum Abschätzen eines Energieverbrauchs bei der Erzeugung eines Produkts mittels einer elektronischen Recheneinrichtung. Ferner betrifft die Erfindung ein Computerprogrammprodukt, ein computerlesbares Speichermedium sowie eine elektronische Recheneinrichtung.

Insbesondere beim Betrieb eines industriellen Energiemanagementsystems (EMS) müssen viele Betriebsdaten, insbesondere energetische Lastprofile, Produktionsprofile, Eigenverbrauch und Effizienz der Produktionsanlagen, insbesondere dabei die verwendeten Aggregate und Werkzeuge in deren Zusammenhang über die Projektionskette, erfasst und verarbeitet werden.

Für die Bestimmung von Steuermaßnahmen im Rahmen des Energiemanagements sind insbesondere die Kenntnisse des Betriebszustands der alten Anlagen wichtig. Darüber hinaus ist die Erfassung der Verbrauchsdaten der Produktionsschritte ein wichtiges Problem für Energiekostenoptimierung, aber auch eine zukünftig drohenden verpflichtenden Taxonomie, beispielsweise ein Ausweis über einen Energieverbrauch, ein CO2-Fußabdruck pro Produkt, insbesondere der erstellten Produkte, kann damit entgegengetreten werden.

Zur Erfassung der Betriebsdaten während der einzelnen Produktionsschritte einer industriellen Produktion werden derzeit - soweit vorhanden und als Datenquelle für Energieverbräuche abfragbar - die Steuergeräte, einzelnen Aggregate und Werkzeuge der Produktionskette beziehungsweise des gesamten Betriebsortes, der so genannte Total Demand, verwendet. Darüber hinaus müssen Sensoren zur Erfassung der Verbrauchsdaten eingesetzt werden. Der Einsatz von Sensoren ist teuer und fehleranfällig, was insbesondere zum Ausfall des Gerätes führen kann, was eine regelmäßige Wartung verursacht, beziehungsweise einen Wechsel oder auch einen Batteriewechsel durchzuführen ist. Für die Integration in bestehende Energiemanagementsysteme (EMS) wird zusätzlicher Aufwand aufgebracht. Auch die Integration sowohl der Sensordaten als auch der Erfassung der Steuergerätedaten in das EMS-Überwachungssystem erfordert einen nicht unerheblichen ingenieurstechnischen Aufwand. Bei Installationsänderung der Produktionsabläufe ist ebenfalls ein hoher Aufwand erforderlich. Wird die Produktionskette umgebaut, um beispielsweise eine flexible Produktion bereitstellen zu können, muss eventuell dieser Integrationsaufwand erneut aufgebracht werden, und das EMS entsprechend angepasst werden. Die Kosten incl. der Integrationskosten für den Einsatz von Sensoren und die explizite Abfrage aller Steuergerätedaten der Aggregate und Werkzeuge einer Produktionskette sind dabei nicht unerheblich.

Insbesondere ist hierzu aus dem Stand der Technik bereits bekannt, dass entsprechende Sensoren installiert werden und das Auslesen der Steuergerätedaten zum Zweck der Verbrauchsdatenerfassung und des Energiemanagements realisiert wird. Zur Erfassung der Betriebsdaten und Energieverbräuche werden - soweit vorhanden und als Datenquelle für Energieverbräuche abfragbar - bevorzugt die Steuergeräte der einzelnen Aggregate und Werkzeuge der Produktionskette und des Betriebsortes verwendet. Wo dies nicht möglich ist, müssen die Sensoren an den Aggregaten, Werkzeugen und Produktionsschritten individuell zur Erfassung der Verbrauchsdaten eingesetzt werden. Oder aber es wird der individuelle Verbrauch des Produktionsschrittes etc. gar nicht erst erfasst. Die Daten werden dabei üblicherweise im EMS gesammelt, das die Verbrauchsdaten zumindest überwacht und in einer Datenbank erfasst und somit eine Historie erstellt. Zusätzlich zu den einzelnen Verbrauchern wird üblicherweise noch der Gesamtverbrauch der eingesetzten Energieformen erfasst. Insbesondere die Erfassung der einzelnen Energieverbraucher ist dabei meist lückenhaft, da manche Produktionsschritte, Werkzeuge oder dergleichen keine Verbrauchssensoren beziehungsweise Steuergerätedaten haben und auch weitere für einen Produktionsstandort übliche Verbraucher, wie zum Beispiel Raum heizen, kühlen, Licht, Fahrzeuge für Materiallogistik, beispielsweise Gabelstapler, Pumpen oder dergleichen nicht unbedingt mit Sensoren beziehungsweise Steuergeräten ausgestattet sind oder werden sollen beziehungsweise ins EMS nicht integriert sind oder werden sollen.

Wird ein neuer signifikanter Verbraucher in die Produktion integriert, bedeutet das im Allgemeinen auch einen erneuten Aufwand für dessen Integration in das Energiemanagementsystem.

Die Erfassung der Energieformen und auch der Aggregate, Werkzeuge oder Produktionsschritte erfolgt dabei üblicherweise nicht immer mit gleicher Zeitauflösung. Beispielsweise sind unterschiedliche Zeitauflösungen mit instantan, fünf Minuten, fünfzehn Minuten, stündlich, tageweise, wochenweise, monatsweise oder Jahresverbrauch vorgegeben. Die Folge daraus ist, dass typischerweise nicht alle Verbraucher einzeln erfasst werden. Eine komplette Zuordnung der Verbräuche zu einzelnen Werkzeugen, Anlagen und Produktionslinien ist oftmals schwierig. Dies gilt umso mehr, wenn eine hohe zeitliche Auflösung, beispielsweise von kleiner als einer Stunde, angestrebt wird.

Aufgabe der vorliegenden Erfindung ist es, ein Verfahren, ein Computerprogrammprodukt, ein computerlesbares Speichermedium sowie eine elektronische Recheneinrichtung zu schaffen, mittels welchen verbessert ein Energieverbrauch bei der Produktion eines Produkts abgeschätzt werden kann.

Diese Aufgabe wird durch ein Verfahren, ein Computerprogrammprodukt, ein computerlesbares Speichermedium sowie durch eine elektronische Recheneinrichtung gemäß den unabhängigen Patentansprüchen gelöst. Vorteilhafte Ausgestaltungsformen sind in den Unteransprüchen angegeben.

Ein Aspekt der Erfindung betrifft ein Verfahren zum Abschätzen eines Energieverbrauchs bei der Erzeugung eines Produkts mittels einer elektronischen Recheneinrichtung. Es wird eine Materialbedarfsplanung vorgegeben, wobei die Materialbedarfsplanung zumindest einen Produktionsmaschinenverbrauch des zu produzierenden Produkts umfasst. Ferner wird zumindest ein historischer Energieverbrauch für ein in der Vergangenheit produziertes Produkt vorgegeben. Es erfolgt das Abschätzen des Energieverbrauchs durch Auswerten der Materialbedarfsplanung und dem historischen Energieverbrauch mittels eines maschinellen Lernalgorithmus der elektronischen Recheneinrichtung.

Insbesondere mit dem Einsatz des maschinellen Lernalgorithmus, welcher auch als Artificial Intelligence bezeichnet werden kann, die den Zusammenhang von Auftreten, Formen und Profilen des Energieverbrauchs mit dem Betrieb der vorhandenen Aggregate und Werkzeuge "erlernen" kann und auch diesen zuordnen kann, kann die Anzahl der einzusetzenden Sensoren beziehungsweise der in das Energiemanagementsystem integrierten Steuergeräteabfragen auf wenige zentral erfassbare Summenparameter reduziert werden. Die Kosten incl. Integrationskosten für den Einsatz von Sensoren und die explizite Abfrage aller Steuergerätedaten der Aggregate und Werkzeuge in der Produktionskette reduziert sich dadurch stark.

Neben dem Energiemanagementsystem gibt es in Industrieanlagen auch die so genannte Materialbedarfsplanung (Enterprise resource planning - ERP). Dies beinhaltet typischerweise eine Produktionsplanung und -steuerung, insbesondere wann welche Produkte mit welchen Werkzeugen, Produktionsanlagen oder dergleichen gemacht werden und wurden, wodurch sich auch eine Historie ergibt. Dieses kann neben den erfassten Verbrauchsdaten als "exogene" Datenquelle für den Betrieb und das Training des maschinellen Lernalgorithmus herangezogen werden. Der Einsatz von Sensoren, incl. Integrationsaufwand für die Auswertung, kann somit minimiert werden. Lücken in der Erfassung können so geschlossen werden, da der maschinelle Lernalgorithmus bei ausreichender Anzahl an Stützdaten entlang einer Produktionskette auch ohne eine vollständige Erfassung aller Einzelverbraucher trainiert werden kann.

Der maschinelle Lernalgorithmus bietet dadurch auch eine erhöhte Flexibilität gegenüber einem rein sensorbasierten Energiemanagementsystem. So kann der maschinelle Lernalgorithmus zum Beispiel geänderte Produktionsschritte und Abläufe beziehungsweise auf neue oder fehlende Aggregate und Werkzeuge erkennen und auf diese geänderte Situation neu trainiert werden, ohne dabei zusätzlichen Aufwand für die Integration neuer Sensoren beziehungsweise Steuergerätedaten in das Energiemanagementsystem realisieren zu müssen.

Gemäß einer vorteilhaften Ausgestaltungsform wird ein Produktlebenszyklus während des Herstellungsprozesses des Produkts zusätzlich mittels des maschinellen Lernalgorithmus ausgewertet und bei der Abschätzung des Energieverbrauchs berücksichtigt. Beispielsweise können so auch Parameter, welche neben der reinen Erzeugung Auswirkungen auf den Energieverbrauch haben, mit berücksichtigt werden. Beispielsweise kann eine Logistik, um das Produkt von einem ersten Ort zu einem zweiten Ort bringen zu können, ebenfalls mit berücksichtigt werden, was wiederum zu einer genaueren Abschätzung des Energieverbrauchs führt. Des Weiteren können im Produktlebenszyklus auch Lagerkosten sowie Personenkosten zur Herstellung ebenfalls mit berücksichtigt werden. Somit kann eine vollumfängliche Abschätzung des Energieverbrauchs realisiert werden.

Es hat sich weiterhin als vorteilhaft erwiesen, wenn aktuelle Betriebsbedingungen einer Umgebung zumindest einer Produktionsmaschine während des Herstellungsprozesses mit durch den maschinellen Lernalgorithmus ausgewertet werden. Insbesondere können dabei beispielsweise Umgebungstemperaturen und/oder aktuelle Lichtverhältnisse und/oder eine aktuelle Produktionsuhrzeit und/oder eine aktuelle Jahreszeit mit bei der Abschätzung berücksichtigt werden. Beispielsweise können somit Heizkosten oder Kühlkosten in Abhängigkeit der aktuellen Umgebungstemperatur berücksichtigt werden. Des Weiteren kann ein Energieverbrauch, um beispielsweise innerhalb der Halle, in der sich die Produktionsmaschine befindet, Licht zu erzeugen ebenfalls mit berücksichtigt werden. Sollte beispielsweise in den Sommermonaten kein Licht angeschaltet werden, beziehungsweise in den Wintermonaten schon, so kann dies ebenfalls mit berücksichtigt werden. Des Weiteren kann auch eine Produktionsuhrzeit, beispielsweise Tageszeit oder Nachtzeit, ebenfalls mit berücksichtigt werden. Des Weiteren kann auch eine aktuelle Jahreszeit mit berücksichtigt werden, beispielsweise Sommer oder Winter, wobei sich hierbei dann wiederum entsprechende Umgebungstemperaturen oder dergleichen ändern können. Somit kann vollumfänglich eine Abschätzung des Energieverbrauchs bei der Herstellung des Produkts realisiert werden.

Eine weitere vorteilhafte Ausgestaltungsform sieht vor, dass der tatsächliche Energieverbrauch bei der Erzeugung des Produkts mittels zumindest einer Erfassungseinrichtung erfasst wird und der tatsächliche Energieverbrauch mit dem abgeschätzten Energieverbrauch verglichen wird und der Vergleich zum Anlernen des maschinellen Lernalgorithmus genutzt wird. Insbesondere kann somit eine Art Rückpropagation des tatsächlichen Energieverbrauchs stattfinden, um den maschinellen Lernalgorithmus anlernen zu können. Ebenfalls kann dies als sogenannte Evaluation angesehen werden, ob das abgeschätzte Ergebnis mit dem tatsächlichen Ergebnis übereinstimmt. Sollte dies nicht der Fall sein, so kann ein entsprechender Trainingsdatensatz erzeugt werden, welcher wiederum den maschinellen Lernalgorithmus anlernen kann. Somit kann der maschinelle Lernalgorithmus verbessert zukünftig den Energieverbrauch eines Produkts abschätzen.

Ferner hat es sich als vorteilhaft erwiesen, wenn eine Art des Energieverbrauchs berücksichtigt wird. Beispielsweise kann ein Dampfverbrauch und/oder ein elektrischer Energieverbrauch und/oder ein Gasverbrauch und/oder ein Wasserstoffverbrauch als jeweilige Art des Energieverbrauchs berücksichtigt werden. Insbesondere sind in Abhängigkeit der Art unterschiedliche Energien und auch somit unterschiedliche Energieintensitäten zu berücksichtigt. Durch die Art der Erfassung kann wiederum auf den Gesamt-Energieverbrauch zuverlässig geschlossen werden.

Ferner hat es sich als vorteilhaft erwiesen, wenn eine aktuelle elektrische Energieerzeugung durch zumindest eine lokale Stromerzeugungseinrichtung berücksichtigt wird. Sollte beispielsweise die Herstellungsstätte über eine Photovoltaikanlage oder über eine Wasserkraftanlage oder über eine Windkraftanlage verfügen, so kann die durch diese lokale Stromerzeugungseinrichtung erzeugte Energie ebenfalls mit berücksichtigt werden. Insbesondere können somit entsprechende Kosten, insbesondere Kostenreduzierung, bei der Bestimmung beziehungsweise Abschätzung des Energieverbrauchs ebenfalls mit berücksichtigt werden. Dadurch kann beispielsweise abgeschätzt werden, ob das Produkt im Wesentlichen CO2-neutral erzeugt werden konnte, oder ob externe Energien notwendig waren.

Es hat sich weiterhin als vorteilhaft erwiesen, wenn auf Basis des abgeschätzten Energieverbrauchs eine zukünftige Materialbedarfsplanung angepasst wird. Beispielsweise kann überprüft werden, ob zukünftig das Produkt in einem gewissen Zeitraum erzeugt werden kann. Insbesondere kann somit ein Optionenraum bereitgestellt werden, welches es einem Nutzer der elektronischen Recheneinrichtung beziehungsweise des Energiemanagementsystems erlaubt, mögliche zukünftige Zeiträume auszuwerten, um den zukünftigen zeitlichen Energieverbrauch der Produktion, runtergebrochen auf Aggregate und Werkzeuge beziehungsweise den einzelnen Produktionsschritten vorherzusagen. Dadurch kann das Energiemanagementsystem hochflexibel eingesetzt werden, da beispielsweise gezielte, auch produktionstechnisch mögliche Variationen von Planungsdaten mit berücksichtigt werden können.

Ferner hat es sich als vorteilhaft erwiesen, wenn auf Basis des abgeschätzten Energieverbrauchs ein CO2-Fußabdruck des Produkts für die Erzeugung bestimmt wird. Insbesondere kann somit überprüft werden, in wie weit das erzeugte Produkt Auswirkungen auf die CO2-Bilanz des Herstellungsunternehmens hat.

Ferner hat es sich als vorteilhaft erwiesen, wenn ein Materialeinsatz für das Produkt bei der Abschätzung des Energieverbrauchs berücksichtigt wird. Insbesondere benötigen unterschiedliche Materialien unterschiedliche Energien, um entsprechend verarbeitet zu werden. Dies kann ebenfalls mit berücksichtigt werden und bei der Abschätzung des Energieverbrauchs somit detaillierter gestalten zu können.

In einer weiteren vorteilhaften Ausgestaltungsform ist vorgesehen, dass bei der Nutzung von zumindest zwei Produktionsmaschinen für das Produkt ein Zwischenenergieverbrauch mittels des maschinellen Lernalgorithmus abgeschätzt werden kann. Insbesondere, sollte beispielsweise das Produkt über zumindest zwei Produktionsmaschinen erzeugt werden, so kann das Zwischenergebnis genutzt werden. Beispielsweise kann der Zwischenenergieverbrauch mit dem tatsächlichen Zwischenenergieverbrauch abgeglichen werden, wobei dann wiederum darauf zurückgeschlossen werden kann, ob beispielsweise eine Produktionsmaschine defekt ist, da der Zwischenenergieverbrauch nicht mit dem tatsächlichen Zwischenenergieverbrauch übereinstimmt. Des Weiteren können somit unterschiedliche Veränderungen innerhalb der Produktionskette zuverlässig bestimmt und abgeschätzt werden.

Bei dem vorgestellten Verfahren handelt es sich insbesondere um ein computerimplementiertes Verfahren. Daher betrifft ein weiterer Aspekt der Erfindung ein Computerprogrammprodukt mit Programmcodemitteln, welche eine elektronische Recheneinrichtung dazu veranlassen, wenn die Programmcodemittel von der elektronischen Recheneinrichtung abgearbeitet werden, ein Verfahren nach dem vorhergehenden Aspekt durchzuführen. Das Computerprogrammprodukt kann auch als Computerprogramm bezeichnet werden.

Weiterhin betrifft die Erfindung auch ein computerlesbares Speichermedium mit dem Computerprogrammprodukt.

Die Erfindung betrifft auch eine elektronische Recheneinrichtung zum Abschätzen eines Energieverbrauchs bei der Erzeugung eines Produkts, mit zumindest einem maschinellen Lernalgorithmus, wobei die elektronische Recheneinrichtung zum Durchführen eines Verfahrens nach dem vorhergehenden Aspekt ausgebildet ist. Insbesondere wird das Verfahren mittels der elektronischen Recheneinrichtung durchgeführt.

Die elektronische Recheneinrichtung weist beispielsweise Prozessoren, Schaltkreise, insbesondere integrierte Schaltkreise, sowie weitere elektronische Bauteile auf, um entsprechende Verfahrensschritte durchführen zu können.

Vorteilhafte Ausgestaltungsformen des Verfahrens sind als vorteilhafte Ausgestaltungsformen des Computerprogrammprodukts, des computerlesbaren Speichermediums sowie der elektronischen Recheneinrichtung anzusehen. Insbesondere weist die elektronische Recheneinrichtung gegenständliche Merkmale auf, um entsprechende Verfahrensschritte durchführen zu können.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

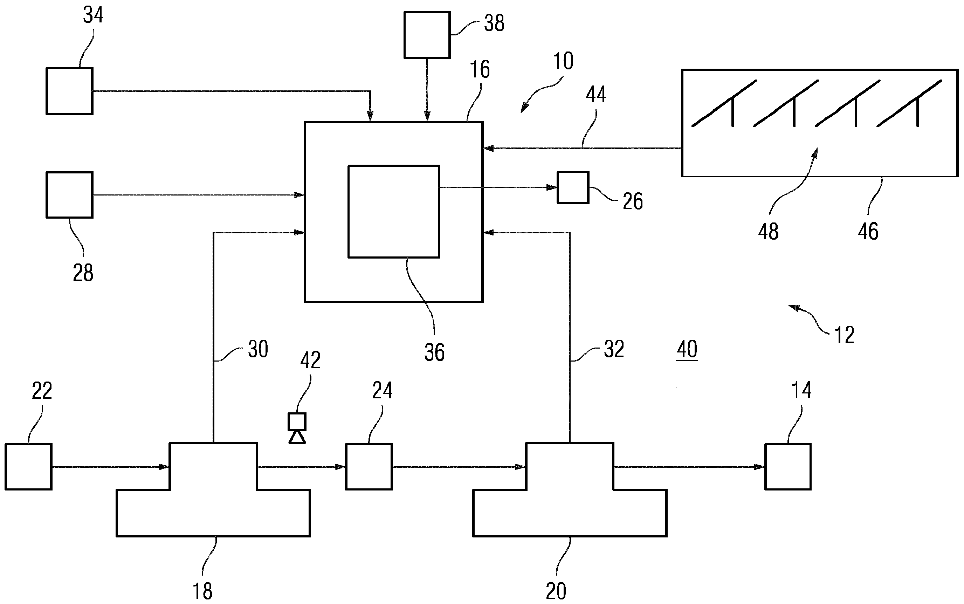

In der nachfolgenden Figur ist ein Ausführungsbeispiel gezeigt. Die Fig. 1 zeigt dabei ein schematisches Blockdiagramm gemäß einer Ausführungsform eines Energiemanagementsystems mit einer Ausführungsform einer elektronischen Recheneinrichtung.

In der Figur sind gleiche oder funktionsgleiche Elemente mit den gleichen Bezugszeichen versehen.

Die FIG 1 zeigt ein schematisches Blockschaltbild gemäß einer Ausführungsform eines Energiemanagementsystems 10 für eine Produktionsstätte 12 zum Herstellen eines Produkts 14. Das Energiemanagementsystem 10 weist hierzu zumindest eine elektronische Recheneinrichtung 16 auf. Die Produktionsstätte 12 weist im vorliegenden Ausführungsbeispiel zumindest eine erste Produktionsmaschine 18 sowie eine zweite Produktionsmaschine 20 auf. Um das Produkt 14 herstellen zu können ist vorgesehen, dass beispielsweise ein Grundmaterial 22 in die erste Produktionsmaschine 18 gegeben wird, wobei ein Zwischenprodukt 24 hergestellt wird. Das Zwischenprodukt 24 wiederum wird der zweiten Produktionsanlage beziehungsweise der zweiten Produktionsmaschine 20 übergeben, wobei dann nach Bearbeitung durch die zweite Produktionsmaschine 20 das Produkt 14 hergestellt ist. Dies ist rein beispielhaft und keinesfalls abschließend zu sehen. Es können selbstverständlich auch mehrere Produktionsmaschinen 18, 20 verwendet werden.

Beim Verfahren zum Abschätzen eines Energieverbrauchs 26 bei der Herstellung des Produkts 14 ist vorgesehen, dass eine Materialbedarfsplanung 28 vorgegeben wird, wobei die Materialbedarfsplanung 28 zumindest einen Produktionsmaschinenverbrauch 30, 32 des zu produzierenden Produkts 14 umfasst. Ferner wird zumindest ein historischer Energieverbrauch 34 vorgegeben. Der Energieverbrauch 26 wird durch Auswerten der Materialbedarfsplanung 28 und dem historischen Energieverbrauch 34 mittels eines maschinellen Lernalgorithmus 36 der elektronischen Recheneinrichtung 16 abgeschätzt.

Ferner ist vorgesehen, dass ein Produktlebenszyklus während des Herstellungsprozesses des Produkts 14 zusätzlich mittels des maschinellen Lernalgorithmus 36 ausgewertet wird und bei der Abschätzung des Energieverbrauchs 26 mit berücksichtigt wird.

Des Weiteren kann vorgesehen sein, dass aktuelle Betriebsbedingungen in einer Umgebung 40 zumindest einer Produktionsmaschine 18, 20 während des Herstellungsprozesses mit durch den maschinellen Lernalgorithmus 26 ausgewertet werden. Beispielsweise können dabei aktuelle Umgebungstemperaturen und/oder aktuelle Lichtverhältnisse und/oder eine aktuelle Produktionsuhrzeit und/oder eine aktuelle Jahreszeit mit bei der Abschätzung berücksichtigt werden. Des Weiteren kann vorgesehen sein, dass der tatsächliche Energieverbrauch bei der Erzeugung des Produkts 14 mittels zumindest einer Erfassungseinrichtung 42 erfasst wird und der tatsächliche Energieverbrauch mit dem abgeschätzten Energieverbrauch 26 verglichen wird und der Vergleich zum Anlernen des maschinellen Lernalgorithmus 36 genutzt wird.

Des Weiteren kann vorgesehen sein, dass eine Art des Energieverbrauchs berücksichtigt wird, wobei dabei insbesondere ein Dampfverbrauch und/oder ein elektrischer Energieverbrauch und/oder ein Gasverbrauch und/oder ein Wasserstoffverbrauch als jeweilige Art des Energieverbrauchs berücksichtigt werden. Des Weiteren kann vorgesehen sein, dass eine aktuell elektrische Energieerzeugung 44 durch zumindest eine lokale Stromerzeugungseinrichtung 46, im vorliegenden Ausführungsbeispiel insbesondere als Photovoltaikanlage 48 ausgebildet, mit berücksichtigt wird.

Ferner kann vorgesehen sein, dass auf Basis des abgeschätzten Energieverbrauchs 26 eine zukünftige Materialbedarfsplanung angepasst wird. Des Weiteren kann auf Basis des abgeschätzten Energieverbrauchs 26 ein $CO_2$-Fußabdruck des Produkts 14 für die Erzeugung bestimmt werden.

Ferner kann, wie in der FIG 1 gezeigt, beispielsweise vorgesehen sein, dass bei der Nutzung von zumindest zwei Produktionsmaschinen 18, 20 für das Produkt 14 ein Zwischenenergieverbrauch, insbesondere des Zwischenprodukts 24, mittels des maschinellen Lernalgorithmus 36 abgeschätzt wird.

Insbesondere zeigt somit die FIG 1, dass neben dem eigentlichen Energiemanagementsystem 12 es sehr oft auch die Materialbedarfsplanung 28 gibt, welche auch als Enterprise Resource Planning System (ERP) bezeichnet wird, und genutzt werden kann. Dies beinhaltet typischerweise eine Produktionsplanung und -steuerung, insbesondere wann welche Produkte mit welchen Werkzeugen beziehungsweise Produktionsanlagen/-maschinen 18, 20 gemacht werden und wurden, was insbesondere eine so genannte Historie mit umfasst. Dies kann neben den erfassten Verbrauchsdaten als "exogene" Datenquelle für den Betrieb und das Training des maschinellen Lernalgorithmus 36 herangezogen werden. Der Einsatz von Sensoren, incl. Integrationsaufwand für die Auswertung, kann somit minimiert werden. Lücken in der Erfassung können so geschlossen werden, da das maschinelle Lernen bei ausreichend Stützdaten entlang der Produktionskette auch ohne eine vollständige Erfassung aller Einzelverbraucher trainiert werden kann.

Der maschinelle Lernalgorithmus 36 kann dabei mittels der Materialbedarfsplanung 28 trainiert werden. Hierzu kann eine Datenakquise auf Basis von historischen Daten, beispielsweise die Produktionsmenge, welche Anlagen wann für die Produktion welcher Produkte verwendet wurden, genutzt werden, wobei diese als exogene Trainingsdaten verwendet werden. Wichtig ist hierbei die Information, welche Aggregate und Werkzeuge wann für die einzelnen Produktionsschritte im Betrieb waren. Diese Daten stehen dann für das Trainieren des maschinellen Lernalgorithmus 36 nicht in Echtzeit zur Verfügung. Des Weiteren können zentrale historische Daten als Datenakquise genutzt werden, beispielsweise im Energiemanagementsystem 12 oder in der Materialbedarfsplanung 28, welche über Sensoren oder Steuergeräte in Echtzeit erfasste Energiedaten umfassen. Beispielsweise können Verbräuche, Strom und Brennstoffe und/oder industrielle Einsatzstoffe sowohl gesamt als auch für einzelne Produktionsschritte, spezielle Lastprofile, also zum Beispiel Stromverbrauch, Gasverbrauch, Dampfeinsatz, Wasserverbrauch, Wasserstoffverbrauch und so weiter genutzt werden und als energetische endogene Trainingsdaten für den maschinellen Lernalgorithmus 36 ausgewertet werden. Es wird dann wiederum der maschinelle Lernalgorithmus 36 trainiert und es kann beispielsweise über historische Zeitreihen von einem entsprechenden Eingangsprodukt, beispielsweise dem Grundmaterial 22 und dem Produkt 14, der maschinelle Lernalgorithmus 36 angelernt werden. Im Betrieb werden dann wiederum die Daten der Verbräuche der Energien und der Einsatzstoffe mittels des maschinellen Lernalgorithmus abgeschätzt. Insbesondere kann dies in Abhängigkeit von den verwendeten Aggregaten und Werkzeuge beziehungsweise in einzelnen Produktionsschritten, beispielsweise Aggregation mehrerer Aggregate und Werkzeuge, zugeordnet werden. Es kann eine Evaluation durchgeführt werden, wobei mit neu hinzukommenden Daten die Genauigkeit des maschinellen Lernalgorithmus 36 bewertet und bei Unterscheidung der Genauigkeitsschranke beispielsweise nachtrainiert werden kann.

Ferner können auch aktuelle Materialbedarfsplanungsdaten verwendet werden. Die Datenakquise kann dabei aktuelle Daten der Materialbedarfsplanung 28 des momentanen Produktionsprozesses als Eingangsdaten nutzen. Ferner können Energiesensordaten, insbesondere Leistung pro Zeit oder dergleichen, zusammen mit der Topologieinformation, welche Aggregate "unterhalb" der jeweiligen Subverbrauchserfassung liegen und zu diesem Subverbrauch beitragen können, als Zwischenprodukt hinzugenommen werden. Das Training erfolgt dabei mit Hilfe des Energieverbrauchs der einzelnen verwendeten Aggregate und der Werkzeuge, sowie der Produktionsschritte. Dies kann protokolliert werden. Das Training erfolgt so, dass die geschätzten Einzelverbräuche, das heißt die Energiedaten der jeweiligen Subverbrauchserfassung bestmöglich reproduziert werden.

Ferner können aktuelle Planungsdaten der Materialbedarfsplanung 28 als mögliche "zukünftige Zeitreihen" mittels des trainierten maschinellen Lernalgorithmus 36 ausgebildet werden, um den zukünftigen zeitlichen Energieverbrauch der Produktion, insbesondere heruntergebrochen auf Aggregate und Werkzeuge beziehungsweise den einzelnen Produktionsschritten, vorherzusagen.

Des Weiteren können auch die Materialbedarfsplanungsdaten mittels des maschinellen Lernalgorithmus 36 genutzt werden, um die Erstellung eines Optionenraums für ein flexibles Energiemanagementsystem 10 zu schaffen. Der Optionenraum kann dadurch aufgestellt werden, indem gezielte, aber produktionstechnisch mögliche Variationen von Planungsdaten der Materialbedarfsplanung 28 genutzt werden, bei denen zum Beispiel in einer Tagesvorhersageprognose die Herstellungsziele, beispielsweise Stückzahlen der Produkte, zu einem Zeitpunkt X, beispielsweise wie erwähnt den Tag zuvor, erreicht werden, die einzelnen Produkte 14 und Zwischenprodukte 24 zu unterschiedlichen Zeitpunkten und/oder Reihenfolgen produziert werden. Die Auswertung findet dann mittels des maschinellen Lernalgorithmus 36 statt, wobei hierbei ein Optionenraum der zukünftigen Produktion mit dem zu erwartenden Energieverbrauch und dem Einsatz von Produktionsstoffen, sowie dem daraus resultierenden $CO_2$-Fußabdruck und den zu erwartenden Einkaufspreiskosten für Energie und Einsatz erstellt werden können. Dazu kann ein Modell entwickelt werden, das aus den historischen Variationen der einzelnen Produktionsschritte Flexibilitäten ableitet. Dies wird typischerweise einen kleineren als den tatsächlich verfügbaren Variantenraum entdecken, durch die Automatisierung aber Skalierbarkeitsvorteile beim Energiemanagementsystem 10 bringen. Dieser Optionenraum dient dann beispielsweise als Eingang für das Energiemanagementsystem 10 beziehungsweise die Produktionsplanung über die Materialbedarfsplanung 28, die genutzt werden kann, um den Energieeinsatz über die gezielte Steuerung des ERP beziehungsweise Materialbedarfsplanung 28 als flexible Produktion zu optimieren. Insbesondere kann die Optimierung beispielsweise eine Kostenoptimierung, eine Energieverbrauchsoptimierung oder auch eine $CO_2$-optimierung umfassen. Des Weiteren können auch ausgesuchte Produkte 14 der Produktionsanlage optimiert werden.

Der Optionenraum kann auch dazu genutzt werden, um potentielle Industrie Lastmanagement-Services abzuleiten. Der evaluierte Optionenraum kann auch genutzt werden, um Einsatzmöglichkeiten für ein mögliches industrielles Lastmanagement-Service zu evaluieren. Dazu ist es zusätzlich zu der Vorgehensweise, wie bereits oben beschrieben, notwendig, bei Evaluierung des sinnvollen Optionenraums, die Kosten eines Demand-Side-Response, insbesondere als Shift beziehungsweise Veränderung des Produktionsablaufs auf Anfrage Dritter, im Vergleich zu den erwirtschaftbaren Erträgen beim Einsatz beziehungsweise Verkauf des Services in Betracht zu ziehen. Dieser Service kann dann zum Beispiel dem lokalen Energy Provider beziehungsweise die Übertragungs-Verteilnetze gegen Gebühr zur Verfügung gestellt werden, um zum Beispiel in Zeiten eines kritischen Netzzustands das Netz zu entlasten, wobei hier dann wiederum der Fokus auf Elektrizitätsversorgung liegt.

Es kann ferner auch eine Kontrolle der Vorhersagequalität mittels des maschinellen Lernalgorithmus 36 durchgeführt werden. Der Vergleich ist mittels der Materialbedarfsplanung 28 über den maschinellen Lernalgorithmus 36 vorhergesagten Gesamtverbrauchs der Energien und der Einsatzstoffe mit dem tatsächlich gemessenen Gesamtverbrauch der Energien und Einsatzstoffe wird als Gütemerkmal der Qualität des gelernten maschinellen Lernalgorithmus 36 ausgewertet. Bei zu großer Abweichung, insbesondere einem so genannten Drift der Daten, durch zum Beispiel neue beziehungsweise fehlende Aggregate und Werkzeuge oder umgebaute Produktionsketten, kann der maschinelle Lernalgorithmus 36 mittels protokollierten Daten neu trainiert werden. Dies geschieht idealerweise als automatisierter Prozess unter Verwendung der historischen Daten der Materialbedarfsplanung 28 und des Energiemanagementsystems 12 der kürzlich erfolgten Produktion.

Insbesondere ist somit über das vorgestellte Verfahren eine schnelle Echtzeitschätzung der Verbrauchsdaten der einzelnen Anlagen, Werkzeuge und Produktionsschritte sowie des Gesamtverbrauchs ermöglicht. Dadurch ergeben sich die Funktions- und Leistungsvorteile eines üblicherweise im industriellen Produktionsumfeld vorhandenen Energiemanagementsystems 10 und der Materialbedarfsplanung 28. Es kann eine schnelle Berechnung beziehungsweise Vorhersage zukünftiger Energieverbräuche der einzelnen Verbrauchsdaten der einzelnen Anlagen, Werkzeuge/ und Produktionsschritte sowie des Gesamtverbrauchs aufgrund der von der Materialbedarfsplanung 28 vorgegebenen Produktionsplanung und der Verbrauchsdaten realisiert werden. Daraus erfolgt eine verbesserte Schätzung auch der Verbrauchsdaten, die nicht vom Energiemanagementsystem 12 oder von Sensoren direkt gemessen werden beziehungsweise erfasst wurden. Dadurch kann weiterhin eine detailliertere Information über den Energieverbrauch des geplanten Produktionsablauf realisiert werden. Es kann weiterhin eine mögliche Optimierung der Produktionsplanung unter Nutzung der in einem industriellen Produktionsumfeld bereits vorhandenen Daten aus der bestehenden Materialbedarfsplanung 28 und dem Energiemanagementsystem 10 realisiert werden. Ferner kann das Verfahren zu einer Kostenreduktion für ein erstes Setup des Energiemanagementsystems 10 führen. Das Verfahren kann angewendet werden, ohne dass dafür die Produktionsanlagen vollständig mit Verbrauchssensoren oder Energiedaten oder Steuergerätedaten erfasst werden müssen. Dadurch lässt sich die Anzahl der einzubauenden und zu erfassenden Verbrauchsdatensensoren deutlich reduzieren. Üblicherweise reicht die heute schon im Energiemanagementsystem 10 und in der Materialbedarfsplanung 28 in industriellen Produktionsanlagen vorhandenen beziehungsweise erfassten Verbrauchsdaten, um Produktionsplanungsdaten zur Anwendung im Training des maschinellen Lernalgorithmus 36 aus. Eine geringe Menge an Stützpunkten beispielsweise Sensoren beziehungsweise Steuergeräte zur Verbrauchsdatenerfassung ist dabei meist ausreichend.

Ferner kann eine erhöhte Flexibilität bereitgestellt werden und auf Änderungen im Produktionsablauf reagiert werden, da der Algorithmus eine Kontrolle der Schätzqualität mit dem tatsächlich gemessenen Gesamtverbrauch beziehungsweise gemessenen Verbräuchen des Energiemanagementsystems 10 ermöglicht, der als Qualitätsmerkmal und Indikator für Veränderungen im Produktionsablauf ausgewertet werden kann. Über ein einfaches kosteneffizientes Nachtrainieren des maschinellen Lernalgorithmus 36 ist es ermöglicht, sich auch geänderten Produktionsabläufen beziehungsweise Produktionsschritten beziehungsweise neuen, geänderten, ausgetauschten oder entfernten Produktionsschritten beziehungsweise Werkzeugen und Hilfsaggregaten anzupassen.

Im nachfolgenden Ausführungsbeispiel ist rein beispielhaft ein Gleichungssystem für das Anlernen und/oder den Betrieb der Vorhersage des Energieverbrauchs 26 gezeigt.

Die Summe des Energieverbrauchs E zur "Herstellung" ist für jeden Energievektor c für diesen Herstellprozess auf dem für diesen Herstellprozess geplanten / eingesetzten Produktionsmaschine 18, 20 / Apparate gegeben mit:

$$
\begin{aligned}
&Summe\ E_{c,Herstellprozess,Apparat}(Tageszeit, Datum) = \\
&= \sum_{i=1}^{\substack{verf\ddot{u}gbare \\ Prozessschritte}} \sum_{j=1}^{\substack{verf\ddot{u}gbare \\ Apparate}} x_{i,j}(, Tageszeit, Datum) \\
&\cdot C_{i,j,c}\big(x_{i,j}, Rezept, Wetter, Schichtplan, Tageszeit, Datum, Wochentag, \\
&Zeit\ seit\ Prozessstart\big)
\end{aligned}
$$

Die Summe des Energieverbrauchs "Hintergrundprozess" pro Energievektor c entspricht:

$$
\begin{aligned}
&Summe\ E_{c,Hintergrundprozess}(Tageszeit, Datum) \\
&= \sum_{k=1}^{\substack{signifankte \\ Hintergrundprozesse}} C_{k,c}\big(x_{1,1}, \ldots xi_{imax,jmax}, Wetter, Schichtplan, Tageszeit, Datum, \\
&Wochentag\big)
\end{aligned}
$$

Die Summe des Energieverbrauchs pro Energievektor c ist dann:

$$
\begin{aligned}
&Summe\ E_c(Tageszeit, Datum) \\
&= \sum E_{c,Herstellprozess,Apparat}(Tageszeit, Datum) \\
&+ \sum E_{c,Hintergrundprozess}(Tageszeit, Datum)
\end{aligned}
$$

Für die Anlernphase werden die apparatetypischen Verbrauchsparameter $C_{i,j,c}$ für jeden Energievektor bei deren Einsatz, sowie die spezifischen Verbrauchsparameter für die Hintergrundprozesse $C_{k,c}$ für verschiedene Einsatzkombinationen Prozesse/Rezept/Apparate und Einsatzzeiten aus den historischen Betriebsdaten gelernt.

Gleichzeitig werden dabei energiespezifisch-exogene Inputs - die einen Einfluss auf den (Gesamt-) Energieverbrauch 26 haben können - wie z.B. Wetter, Datum, Tageszeit, Schichtplan etc. - beachtet.

Historische Betriebsdaten werden ebenfalls genutzt. Über das Energiemanagementsystem 12 wird üblicherweise mindestens der Gesamtverbrauch = Summe Energieverbrauch pro Energievektor c überwacht. Zusätzlich werden - teils über das Energiemanagementsystem 12, teils über den Produktlebenszyklus 38 und wo möglich zusätzliche Verbrauchsdaten zu bestimmten Apparaten "individuell überwacht". Über Die Materialbedarfsplanung 28 ist der Einsatz beziehungsweise die Ressourcenplanung der Vergangenheit bekannt.

In der Gleichung wird der "Apparateeinsatz" bzw. die apparatespezifische Produktionsmenge mittels der di-mensionslosen Produktionsrate $x_{ij}(,Tageszeit,Datum)$ für "einen Prozesschritt eines Rezeptes auf diesen Apparat" ausgedrückt, mit:

$$x_{i,j}(,Tageszeit,Datum) = \frac{P_{i,j}(Tageszeit,Datum)}{P_{i,j,max}} \quad,$$

wobei P der Produktionsmenge entspricht.

Mittels solcher historischer Betriebsdaten wird dann zunächst der spezifische Energieeinsatz $C_{i,j,c}$ für jeden Apparat bestimmt. Dies kann beispielsweise in Abhängigkeit von der Art, welches Rezept wird/wurde gefahren und/oder der zugehörigen dimensionslosen Produktionsrate $x_{i,j}$ und/oder der Zeit seit Prozesstart auf diesen Apparat und/oder dem Datum und/oder der Tageszeit und/oder dem Wochentag und/oder dem Wetter und/oder dem Schichtplan bestimmt. Neben den eigentlichen Herstellprozessen, werden auch sogenannte "Hintergrundprozesse" im Gesamtenergieverbrauch berücksichtigt. Das sind z.B. das Heizen (Raumheizung) und/oder das Kühlen (Raumkühlung) und/oder ein Energieverbrauch für ICT (Information and Communication Technologie, also, z.B. Betrieb Kontrolleinheiten und Sensoren, Betrieb Cloudserver etc.) und/oder eine Surveillance (Sicherheit Gebäude) und/oder Pumpen für Abwasser und/oder eine Abluftreinigung.

Deren spezifische Energieeinsatz $C_{k,c}$ ist unter anderem abhängig von den Produktionsraten $x_{i,j}$ beziehungs-weise Kombinationen aller aktuell laufender Prozessschritte auf den verschiedenen Apparaten. Es werden daher für die Bestimmung der $C_{k,c}$ alle im Zeitpunkt (Tageszeit, Datum) gegebenen Produktionsraten $x_{1,1} ... x_{imax,jmax}$ berück-sichtigt.

Für das Anlernen werden beziehungsweise müssen aber nicht alle Prozessschritte und Apparate/Produktionsmaschinen 18, 20 individuell erfasst bzw. überwacht werden. Vielmehr kann über eine im Lauf der Zeit wechselnde Materialbedarfsplanung 28 bei ausreichend langer produktionstechnischer Historie beziehungsweise Verbrauchsdatenbasis der spezifische Energieverbrauch jedes Einzelschrittes auf den Einzelapparaten ermittelt beziehungsweise gelernt werden solange der Gesamtverbrauch überwacht ist. Gleiches gilt für die Hintergrundprozesse und deren Verbrauchsabhängigkeit von der jeweiligen Produktion, Wetter, Schichtplanung, etc.. Diese werden üblicherweise auch nicht in hoher zeitlicher Auflösung überwacht werden.

Grundsätzlich kann dabei die Erfassung der einzelnen Herstell- und Hintergrundprozesse auch auf unterschiedlicher zeitlicher Auflösung erfolgen, die z.B. dann gegebenenfalls über Dissaggregation vor dem Anlernen der des maschinellen Lernalgorithmus 36 bzw. der Vorhersage mittels des maschinellen Lernalgorithmus 36 auf eine einheitliche Zeitauflösung gebracht wird.

Mit dem angelernten Modell und dem Wissen beziehungsweise Prognosen über die Planung welches Rezept gefahren wird, also der Materialbedarfsplanung 28 und der geplanten, zugehörigen dimensionslosen Produktionsrate pro Apparat $x_{i,j}$ und der Zeit seit Prozesstart auf diesen Apparat, das Datum, die Tageszeit, der Wochentag, das Wetter ( beispielsweise als Vorhersage) und dem Schichtplan gemäß der Materialbedarfsplanung 28 kann dann wieder der aktuelle beziehungsweise - bei Verwendung von Prognosen für die Inputparameter - der zukünftige gesamte Energieverbrauch 26, aber auch geschlüsselt pro Herstellprozess und/oder Hintergrundprozess - bestimmt werden für eine gegebenes Datum und die Tageszeit.

Ein "Rezept" weist dabei beispielsweise verschiedene aufeinander oder parallel erfolgende Prozessschritte auf, die auf verschiedenen Produktionsmaschinen 18, 20 / Apparaten und Anlagen abgearbeitet werden können. Ein Rezept beinhaltet dabei zum Beispiel alle Schritte von der Anlieferung, der Arbeitsvorbereitung, der eigentlichen Bearbeitung/Produktion bis zu Verpackung und Vertriebsvorbereitung. Je nach Verfügbarkeit (z.B. bei mehreren parallelen Produktionslinien) können die verwendeten Apparate pro Rezept wechseln.

Bezugszeichenliste

10    Produktionsstätte
12    Energiemanagementsystem
14    Produkt
16    elektronische Recheneinrichtung
18    erste Produktionsmaschine
20    zweite Produktionsmaschine
22    Grundmaterial
24    Zwischenprodukt
26    Energieverbrauch
28    Materialbedarfsplanung
30    aktueller Energieverbrauch
32    aktueller Energieverbrauch
34    historischer Energieverbrauch
36    maschineller Lernalgorithmus
38    Produktlebenszyklus
40    Umgebung
42    Erfassungseinrichtung
44    aktuelle elektrische Energieerzeugung
46    Stromerzeugungseinrichtung
48    Photovoltaikanlage

**Patentansprüche**

1.  Verfahren zum Abschätzen eines Energieverbrauchs (26) bei der Herstellung eines Produkts (14) mittels einer elektronischen Recheneinrichtung (16), mit den Schritten:

    - Vorgeben einer Materialbedarfsplanung (28), wobei die Materialbedarfsplanung (28) zumindest einen Produktionsmaschinenverbrauch (30 ,32) des zu produzierenden Produkts (14) umfasst;
    - Vorgeben von zumindest einem historischen Energieverbrauch (34) für ein in der Vergangenheit produziertes Produkt (14); und
    - Abschätzen des Energieverbrauchs (26) durch Auswerten der Materialbedarfsplanung (28) und dem historischen Energieverbrauch (34) mittels eines maschinellen Lernalgorithmus (36) der elektronischen Recheneinrichtung (16).

2.  Verfahren nach Anspruch 1, wobei ein Produktlebenszyklus (38) während des Herstellungsprozesses des Produkts (14) zusätzlich mittels des maschinellen Lernalgorithmus (36) ausgewertet wird und bei der Abschätzung des Energieverbrauchs (26) berücksichtigt wird.

3.  Verfahren nach Anspruch 1 oder 2, wobei aktuelle Betriebsbedingungen in einer Umgebung (40) zumindest einer Produktionsmaschine (18, 20) während des Herstellungsprozesses mit durch den maschinellen Lernalgorithmus (36) ausgewertet werden.

4.  Verfahren nach Anspruch 3, wobei aktuelle Umgebungstemperaturen und/oder aktuelle Lichtverhältnisse und/oder eine aktuelle Produktionsuhrzeit und/oder eine aktuelle Jahreszeit mit bei der Abschätzung berücksichtigt werden.

5.  Verfahren nach einem der vorhergehenden Ansprüche, wobei der tatsächliche Energieverbrauch bei der Erzeugung des Produkts (14) mittels zumindest einer Erfassungseinrichtung (42) erfasst wird und der tatsächliche Energieverbrauch mit dem abgeschätzten Energieverbrauch (26) verglichen wird und der Vergleich zum Anlernen des maschinellen Lernalgorithmus (36) genutzt wird.

6.  Verfahren nach einem der vorhergehenden Ansprüche, wobei eine Art des Energieverbrauchs berücksichtigt wird.

7.  Verfahren nach Anspruch 6, wobei ein Dampfverbrauch und/oder ein elektrischer Energieverbrauch und/oder ein Gasverbrauch und/oder ein Wasserstoffverbrauch als jeweilige Art des Energieverbrauchs berücksichtigt werden.

8.  Verfahren nach Anspruch 7, wobei eine aktuelle elektrische Energieerzeugung (44) durch zumindest eine lokale Stromerzeugungseinrichtung (46) berücksichtigt wird.

9. Verfahren nach einem der vorhergehenden Ansprüche, wobei auf Basis des abgeschätzten Energieverbrauchs (26) eine zukünftige Materialbedarfsplanung (28) angepasst wird.

10. Verfahren nach einem der vorhergehenden Ansprüche, wobei auf Basis des abgeschätzten Energieverbrauchs (26) ein CO2-Fußabdruck des Produkts (14) für die Erzeugung bestimmt wird.

11. Verfahren nach einem der vorhergehenden Ansprüche, wobei ein Materialeinsatz für das Produkt (14) bei der Abschätzung des Energieverbrauchs (26) berücksichtigt wird.

12. Verfahren nach einem der vorhergehenden Ansprüche, wobei bei einer Nutzung von zumindest zwei Produktionsmaschinen (18, 20) für das Produkt (14) ein Zwischenenergieverbrauch mittels des maschinellen Lernalgorithmus (36) abgeschätzt wird.

13. Computerprogrammprodukt mit Programmcodemitteln, welche eine elektronische Recheneinrichtung (16) dazu veranlassen, wenn die Programmcodemittel von der elektronischen Recheneinrichtung (16) abgearbeitet werden, ein Verfahren nach einem der Ansprüche 1 bis 12 durchzuführen.

14. Computerlesbares Speichermedium mit einem Computerprogrammprodukt nach Anspruch 13.

15. Elektronische Recheneinrichtung (16) zum Abschätzen eines Energieverbrauchs (26) bei der Erzeugung eines Produkts (14), mit zumindest einem maschinellen Lernalgorithmus (36), wobei die elektronische Recheneinrichtung (16) zum Durchführen eines Verfahrens nach einem der Ansprüche 1 bis 12 ausgebildet ist.

Europäisches Patentamt

European Patent Office

Office européen des brevets

# EUROPÄISCHER RECHERCHENBERICHT

**Nummer der Anmeldung**

EP 22 18 6693

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2004 048235 A1 (SIEMENS AG [DE]) 20. April 2006 (2006-04-20) * Absatz [0001] – Absatz [0003] * * Absatz [0020] – Absatz [0022]; Anspruch 1 * ----- | 1-15 | INV. G05B19/418 G05B23/02 |
| X | DE 10 2004 048236 A1 (SIEMENS AG [DE]) 13. April 2006 (2006-04-13) * Absatz [0001] * * Absatz [0004] * * Absatz [0017]; Anspruch 1 * ----- | 1-15 | |
| X | WO 2022/073935 A1 (BASF SE [DE]) 14. April 2022 (2022-04-14) * Seite 2, Zeile 15 – Seite 3, Zeile 3 * * Seite 6, Zeile 6 – Seite 17, Zeile 28 * ----- | 1-15 | |
| A | EP 2 120 118 A1 (SIEMENS AG [DE]) 18. November 2009 (2009-11-18) * Absatz [0018] – Absatz [0026] * ----- | 1-15 | RECHERCHIERTE SACHGEBIETE (IPC) G05B G06Q G06N |

Der vorliegende Recherchenbericht wurde für alle Patentansprüche erstellt

| Recherchenort | Abschlußdatum der Recherche | Prüfer |
|---|---|---|
| Den Haag | 5. Januar 2023 | Cîrîc, George |

EPO FORM 1503 03.82 (P04C03)

# EP 4 312 096 A1

**ANHANG ZUM EUROPÄISCHEN RECHERCHENBERICHT
ÜBER DIE EUROPÄISCHE PATENTANMELDUNG NR.**
EP 22 18 6693

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-01-2023

| Im Recherchenbericht angeführtes Patentdokument | Datum der Veröffentlichung | Mitglied(er) der Patentfamilie | Datum der Veröffentlichung |
|---|---|---|---|
| DE 102004048235 A1 | 20-04-2006 | DE 102004048235 A1 | 20-04-2006 |
| | | WO 2006037732 A1 | 13-04-2006 |
| DE 102004048236 A1 | 13-04-2006 | DE 102004048236 A1 | 13-04-2006 |
| | | EP 1706846 A1 | 04-10-2006 |
| | | WO 2006037734 A2 | 13-04-2006 |
| WO 2022073935 A1 | 14-04-2022 | US 2022107618 A1 | 07-04-2022 |
| | | US 2022108326 A1 | 07-04-2022 |
| | | US 2022108327 A1 | 07-04-2022 |
| | | WO 2022073935 A1 | 14-04-2022 |
| EP 2120118 A1 | 18-11-2009 | KEINE | |

EPO FORM P0461

Für nähere Einzelheiten zu diesem Anhang : siehe Amtsblatt des Europäischen Patentamts, Nr.12/82